Europäisches Patentamt

European Patent Office

Office européen des brevets

(11) Veröffentlichungsnummer: **0 269 038 B1**

(12) **EUROPÄISCHE PATENTSCHRIFT**

(45) Veröffentlichungstag der Patentschrift: **10.07.91**

(51) Int. Cl.⁵: **H01M 10/39**

(21) Anmeldenummer: **87117193.0**

(22) Anmeldetag: **21.11.87**

(54) **Hochtemperatur-Speicherbatterie.**

(30) Priorität: **28.11.86 DE 3640749**

(43) Veröffentlichungstag der Anmeldung:
**01.06.88 Patentblatt 88/22**

(45) Bekanntmachung des Hinweises auf die
Patenterteilung:
**10.07.91 Patentblatt 91/28**

(84) Benannte Vertragsstaaten:
**DE ES FR GB IT SE**

(56) Entgegenhaltungen:
**DE-A- 2 645 795**
**DE-B- 1 771 081**
**DE-C- 2 157 939**
**GB-A- 1 471 914**

(73) Patentinhaber: **BBC Brown Boveri Aktiengesellschaft
Kallstadter Strasse 1
W-6800 Mannheim 31(DE)**

(72) Erfinder: **Harbach, Friedrich, Dr. Dipl.-Phys.
Bürgerstrasse 2
W-6900 Heidelberg(DE)**
Erfinder: **Knödler. Reinhard, Dr. Dipl.-Phys.
Humboldtstrasse 16
W-6907 Nussloch(DE)**
Erfinder: **Mennicke, Stefen, Dr. Dipl.-Phys.
Türkisweg 27
W-6906 Leimen(DE)**
Erfinder: **Weiler, Ludwig, Dr. Dipl.-Chem.
Hagellachstrasse 35
W-6900 Heidelberg(DE)**
Erfinder: **Krapf, Rudolf
Erlenweg 5
W-6906 Leimen(DE)**

(74) Vertreter: **Rupprecht, Klaus, Dipl.-Ing. et al
c/o BBC Brown Boveri Aktiengesellschaft
ZPT Postfach 100351 Kallstadter Strasse 1
W-6800 Mannheim 1(DE)**

## Beschreibung

Die Erfindung bezieht sich auf eine Hochtemperatur-Speicherbatterie mit wenigstens zwei übereinander angeordneten Speicherzellen, die jeweils zwei Reaktandenräume aufweisen, welche durch einen flächig ausgebildeten ionenleitenden Festelektrolyten voneinander getrennt und durch flächige als Elektroden dienende Bauteile nach außen begrenzt sind

Solche Hochtemperatur-Speicherbatterien, die aus einer Vielzahl von elektrochemischen Speicherzellen aufgebaut sind, werden in vermehrtem Maße für den Antrieb von Elektrofahrzeugen eingesetzt.

Aus der DE-OS 21 57 939 ist eine Hochtemperatur-Speicherbatterie bekannt, die aus einer Vielzahl von plattenförmig ausgebildeten elektrochemischen Speicherzellen aufgebaut ist. Diese sind so aufeinandergestapelt, daß der Kathodenraum der einen Speicherzelle an den Anodenraum der benachbarten Speicherzelle grenzt und diese beiden aneinandergrenzenden Reaktandenräume eine gemeinsame Elektrode aufweisen. Diese Elektrode dient gleichzeitig als Begrenzung für beide Speicherzellen. Der Stapel von Speicherzellen ist zwischen Aluminiumscheiben verspannt, die mittels Stahlbolzen und Stahlmuttern zusammengehalten werden. Nachteilig bei dieser Hochtemperaturspeicherbatterie ist die schlechte Abdichtung der Speicherzellen und der gesamten Batterie. Bei diesem Aufbau der Hochtemperaturspeicherbatterie ist das Auslaufen der Reaktanden nicht ausgeschlossen, wodurch es zu einer Beschädigung der Hochtemperaturspeicherbatterie kommt.

Aus der GB-A1471914 ist eine Hochtemperaturspeicherbatterie bekannt, die aus einer Vielzahl von flächigen Speicherzellen aufgebaut ist. Die Bauelemente der Speicherzellen sind dauerhaft miteinander verbunden. Die Speicherzellen werden durch den Deckel des Gehäuses mittels Druck in diesem gehalten.

Der Erfindung liegt deshalb die Aufgabe zugrunde, eine Hochtemperatur-Speicherbatterie zu schaffen, bei der die Nachteile der bekannten Einrichtung ausgeschlossen werden.

Diese Aufgabe wird erfindungsgemäß durch die Merkmale des Patentanspruches 1 gelöst.

Durch die Anordung einer Vielzahl von plattenförmig ausgebildeten Speicherzellen zu einem Stapel, kann eine Hochtemperatur-Speicherbatterie gebildet werden, die bei gleichem Volumen mehr Speicherzellen mit einer größeren Energiedichte aufnehmen kann als bekannte Einrichtungen, die aus zylinderförmigen Speicherzellen aufgebaut sind. Die verwendeten Speicherzellen sind gegeneinander und gegen den Außenbereich so hermetisch abgedichtet, daß ein Auslaufen der Reaktanden vollständig unterbunden wird. Da die zu einem Stapel zusammengefügten Speicherzellen zusätzlich von einem für alle Speicherzellen gemeinsamen Gehäuse nach außen begrenzt werden, ist eine optimale Abdichtung der Hochtemperatur-Speicherbatterie gewährleistet. Das Gehäuse kann zusätzlich evakuiert oder mit einem Schutzgas gefüllt sein. Durch die zusätzlichen federnden Bauteile innerhalb des Gehäuses kann der Druck, der auf die Speicherzellen zur Abdichtung derselben ausgeübt wird, vergrößert werden. Der Druck wird nicht allein durch das Zusammenpacken der Speicherzellen zu einem Stapel bewirkt.

Weitere erfindungswesentliche Merkmale sind in den Unteransprüchen gekennzeichnet.

Die Erfindung wird nachfolgend anhand einer Zeichnung erläutert.

Die einzige zur Beschreibung gehörende Figur zeigt eine Hochtemperatur-Speicherbatterie 1 im Vertikalschnitt.

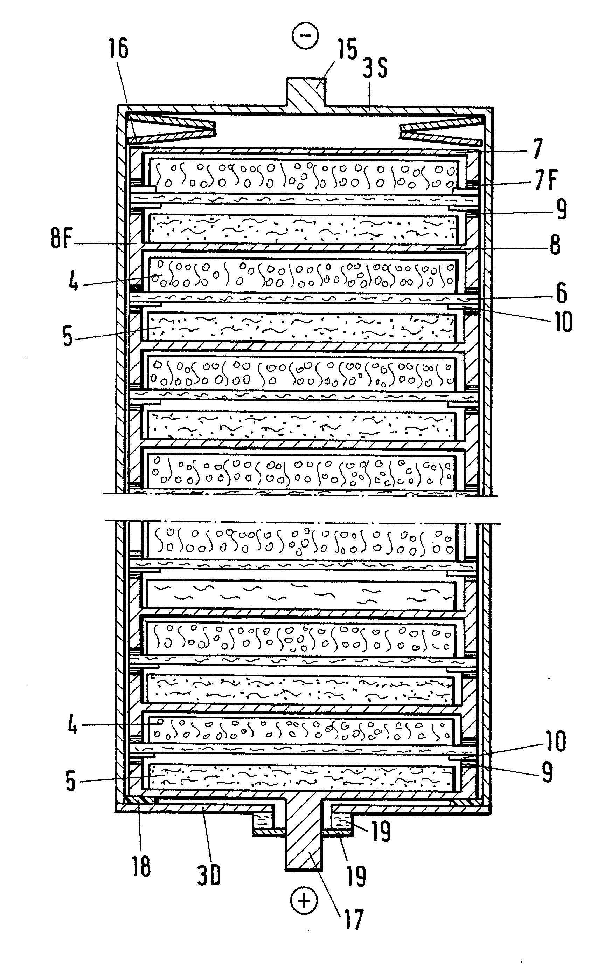

Die Hochtemperatur-Speicherbatterie 1 wird im wesentlichen durch eine Vielzahl von plattenförmigen Speicherzellen 2 und einem Gehäuse 3 gebildet. Dieses ist zylinderförmig ausgebildet und wenigstens an einer Stirnfläche 3S verschlossen. Das Gehäuse 3 und die Speicherzellen 2 weisen Grundflächen mit der gleichen Form auf. Bei dem hier dargestellten Ausführungsbeispiel weisen die Speicherzellen 2 und das Gehäuse 3 eine runde Grundfläche auf. Es besteht die Möglichkeit die Grundflächen bei Bedarf auch als Vielecke oder elipsenförmig auszubilden. Im Inneren einer jeden Speicherzelle 2 sind zwei Reaktandenräume 4 und 5, insbesondere ein Anodenraum 4 und ein Kathodenraum 5 vorgesehen. Diese sind durch einen als Platte ausgebildeten Festelektrolyten 6 voneinander getrennt. Die Abmessungen des Festelektrolyten 6 sind so gewählt, daß sein Außendurchmesser einige Millimeter größer ist als der Innendurchmesser der beiden Reaktandenräume 4 und 5. Die beiden Reaktandenräume 4 und 5 einer jeden Speicherzelle 2 werden nach außenhin, insbesondere zum Gehäuse 3 bzw. zur jeweils benachbarten Speicherzelle 2 hin durch ein plattenförmiges Bauteil 7 bzw. 8 begrenzt. Dieses plattenförmige Bauteil 7,8 ist in seinem Randbereich mit einem rundum geführten Flansch 7F bzw. 8F versehen. Jedes der Bauteile 7 erhält durch seinen Flansch 7F einen U-förmigen Querschnitt. Bei allen Bauteilen 8 ist der Flansch 8F beidseitig der Oberflächen angeordnet. Hierdurch weisen alle Bauteile 8 einen I-förmigen Querschnitt auf. Die Außendurchmesser der Bauteile 7 und 8 sind so gewählt, daß sie geringfügig kleiner sind als der Innendurchmesser des Gehäuses 3, so daß sie gerade noch in dieses eingesetzt werden können. Die Höhe der Flansche 7F ist so gewählt, daß durch sie jeder Reaktandenraum 4,5 zu den Seitenflächen des Gehäuses 3 hin vollständig begrenzt wird. Die Bauteile 7 werden lediglich zur Begrenzung der beiden äußersten Reaktandenräume 4 und 5 verwendet, die der Stirnfläche 3S bzw. dem Deckel 3D des Gehäuses 3 gegenüberliegend angeordnet sind. Wie anhand der Figur zu sehen ist, grenzen durch die hier gewählte Anordnung der Speicherzellen 2 jeweils ein Anodenraum 4 und ein Kathodenraum 5 zweier benachbarter Speicherzellen 2 direkt aneinander. Durch die Bauelemente 8 werden die nebenenanderliegenden Reaktandenräume 4 und 5 zweier benachbarter Speicherzellen 2 jeweils durch ein gemeinsames Bauteil 8 begrenzt. Durch den Flansch 8F, der so angeordnet ist, daß das Bauelement 8 einen I-förmigen Querschnitt aufweist, erfolgt die seitliche Begrenzung der beiden benachbarten Reaktandenräume 4 und 5 zu dem Gehäuse 3 hin. Die Höhe der Flansche 8F ist so gewählt, daß die beiden Reaktandenräume 4 und 5 seitlich vollständig verschlossen sind. Zwischen jedem Festelektrolyten 6 und jedem Flansch 7F bzw. 8F ist eine Dichtung 9 angeordnet. Diese ist bei dem hier dargestellten Ausführungsbeispiel als Ring ausgebildet. Der Festelektrolyt 6 ist im Bereich derFlansche 7F bzw.8F zusätzlich mit einer Isolierschicht 10 aus Glas oder Glaskeramik versehen. Diese Isolierschicht 10 erstreckt sich über den gesamten Bereich einer jeden Dichtung 9 und ist bei dem hier dargestellten Ausführungsbeispiel noch etwas breiter als die Dichtungen 9 ausgebildet, während die Breite der Dichtungen 9 an die Breite der Flansche 7F und 8F angepaßt ist. Zur Ausbildung einer Hochtemperatur-Speicherbatterie werden die Speicherzellen 2 in der oben beschriebenen Weise zu einem Stapel aufeinandergesetzt und gegeneinander abgegrenzt. Die Anzahl der verwendeten Speicherzellen 2 richtet sich nach der Größe des Gehäuses 3. Bei einer vorgegebenen Anzahl von Speicherzellen 2 ist ein entsprechend großes Gehäuse 3 zu wählen. Das Gehäuse 3 dient gleichzeitig als negativer elektrischer Anschlußpol für die in ihm angeordneten Speicherzellen 2. Bei dem hier dargestellten Ausführungsbeispiel sind die Innenflächen des Gehäuses 3 größtenteils gegen die Speicherzellen 2 hin isoliert, wofür eine isolierende Schicht (hier nicht dargestellt) auf die Innenfläche des Gehäuses 3 aufgetragen ist. Lediglich im Bereich des Anodenraumes 4, welcher der Strinfläche 3S des Gehäuses 3 direkt gegenüberliegt, ist die Innenfläche nicht isoliert. Hier steht sie in elektrisch leitendem Kontakt mit dem Bauteil 7, welches diesen Anodenraum 4 begrenzt. Im Bereich der Stirnfläche 3S des Gehäuses 3 ist ein nach außen gerichteter elektrischer Stromabnehmer 15 angeordnet, der elektrisch leitend mit dem Gehäuse 3, insbesondere der Stirnfläche 3S verbunden ist. Um die aufeinandergestapelten Speicherzellen 2 mit dem erforderlichen Druck zusammenzuhalten, ist im Inneren des Gehäuses 3, insbesondere zwischen der Stirnfläche 3S und dem ersten Anodenraum 4 wenigstens ein federndes Bauelement 16 angeordnet. Mit dessen Hilfe wird sichergestellt, daß die zwischen ihm und dem Deckel 3D angeordneten Speicherzellen 2 auslaufsicher zusammengepreßt werden. Bei der hier dargestellten Ausführungsbeispiel ist das federnde Bauelement 16 als Tellerfeder ausgebildet. Ein anderes Bauelement, das ebenfalls federnde Eigenschaften besitzt, kann anstelle einer solchen Tellerfeder auch verwendet werden. So kann ein dehnbares Bauelement, das mit Natrium gefüllt ist, ebenfalls eine Anwendung finden.

Als positiver Stromabnehmer 17 dient ein stabförmiges elektrisch leitendes Bauelement, das mit dem Kathodenraum 5 in Verbindung steht, der dem Deckel 3D des Gehäuses 3 gegenüberliegend angeordnet ist. Erfindungsgemäß ist der positive Stromabnehmer 17 elektrisch leitend mit dem Bauteil 7 verbunden, welches den Kathodenraum 5 nach außenhin begrenzt. Zwischen dem Bauteil 7 und dem Deckel 3D ist ein Isolierring 18 angeordnet. Der positive Stromabnehmer 17 ist durch den Deckel 3D hindurch nach außen geführt und steht einige Millimeter nach außen über. Zwischen dem Stromabnehmer 17 und dem Deckel ist eine Isolation 19 angeordnet, die gleichzeitig als Halteelemente für den stabförmigen Stromabnehmer 17 dient.

Bei den oben beschriebenen Speicherzellen ist der Festelektrolyt aus Betaaluminiumoxid oder einem porösen Magnesiumoxid bzw. Bornitrid gefertigt. Die Anodenräume der Speicherzellen sind entweder mit Natrium oder Lithium gefüllt. Die als Kathodenräume dienenden Teile der Speicherzellen enthalten Schwefel- oder Eisensulfid. Das federnde Bauelement 16, das die Speicherzellen 2 alleine dauerhaft zusammenfügt, ist als Tellerfeder ausgebildet und aus einem elektrisch leitenden Material hergestellt. Das Gehäuse 3 in dem die Speicherzellen angeordnet sind, ist entweder evakuiert oder mit einen Schutzgas gefüllt.

**Ansprüche**

1. Hochtemperaturspeicherbatterie mit wenigstens zwei in einen einseitig geschlossenen Gehäuse (3) als Stapel übereinander angeordneten Speicherzellen (2), die jeweils zwei Reaktandenräume (4 und 5) aufweisen, welche durch einen flächig ausgebildeten ionenleitenden Festelektrolyten (6) voneinander getrennt und durch flächige, als Elektroden dienende Bauelemente (7, 8) nach außen begrenzt sind, dadurch gekennzeichnet, daß der Stapel von Speicherzellen (2) durch das lose Aufeinandersetzen ihrer Bauteile (4,5,6,7,7F,8,8F,9,10) ausgebildet und einseitig durch wenigstens ein gemeinsames federndes Bauelement (16) auslaufsicher zusammengepresst ist, daß die in Bereich der als geschlossenes Ende ausgebildeten Stirnfläche (3S) und des Deckels (3D) angeordneten Reaktandenräume (4, 5) nach außen hin durch ein als Elektrode dienendes Bauteil (7) begrenzt sind, das als Platte ausgebildet und mit einem Flansch (7F) versehen ist, daß die unmittelbar benachbarten Reaktandenräume (4 und 5) zweier benachbarter Speicherzellen (2) durch ein als gemeinsame Elektrode dienendes Bauteil (8) begrenzt sind, das als Platte ausgebildet und mit einem Doppelflansch (8F) versehen ist, der ebenso wie der Flansch (7F) bis an den Festelektrolyten (6) der jeweiligen Speicherzellen (2) herangeführt ist.

2. Hochtemperaturspeicherbatterie nach Anspruch 1, dadurch gekennzeichnet, daß zwischen jedem Flansch (7F, 8F) und jedem Festelektrolyten (6) eine Dichtung (9) und eine Isolierung (10) angeordnet sind.

3. Hochtemperaturspeicherbatterie nach Anspruch 1 oder 2, dadurch gekennzeichnet, daß das Gehäuse (3) als einseitig geschlossener Behälter ausgebildet und die Grundflächen der Speicherzellen (2) und die Grundflächen des Gehäuses (3) die gleiche Form aufweisen, und daß das federnde Bauelement (16) zwischen dem verschlossenen Ende (3S) des Gehäuses (3) und dem ersten als Elektrode dienenden Bauteil (7) angeordnet ist.

4. Hochtemperaturspeicherbatterie nach einem der Ansprüche 1 bis 3, dadurch gekennzeichnet, daß das verschlossene Ende des Gehäuses (3) und das ihm benachbarten Bauteil (7) elektrisch leitend miteinander verbunden sind, und daß daß Gehäuse (3) auf seiner gesamten übrigen Innenfläche isoliert ist.

5. Hochtemperaturspeicherbatterie nach einem der Ansprüche 1 bis 4, dadurch gekennzeichnet, daß das Gehäuse (3) im Bereich seines verschlossenen Endes mit einem nach außen weisenden Stromabnehmer (15) versehen ist, daß das Gehäuse (3) an seinem zweiten Ende mit den Deckel (3D) versehen und ein zweiter stabförmiger Stromabnehmer (17) vorgesehen ist, der an dem Bauteil (7) befestigt ist, das dem Deckel (3D) benachbart angeordnet ist, und daß der stabförmige Stromabnehmer (17) isoliert durch den Deckel (3D) nach außen geführt ist.

6. Hochtemperaturspeicherbatterie nach einem der Ansprüche 1 bis 5, dadurch gekennzeihnet, daß das Gehäuse (3) und die als Elektroden dienenden Bauteile (7, 8) aus einem elektrisch gut leitenden Material gefertigt sind.

7. Hochtemperaturspeicherbatterie nach einem der Ansprüche 1 bis 6, dadurch gekennzeichnet, daß der Festelektrolyt (6) aus Betaaluminiumoxid oder porösem Magnesiumoxid bzw. Bornitrit gefertigt und in den als Anodenraum (4) dienenden Reaktandenraum (4) Natrium oder Lithium gefüllt ist, daß der zweite als Kathodenraum (5) dienende Reaktandenraum Schwefel- oder Eisensulfid enthält, daß das federnde Bauelement (16) als Tellerfeder ausgebildet und aus einem elektrisch leitenden Material hergestellt ist, und daß das Gehäuse (3) evakuiert oder mit einem Schutzgas gefüllt ist.

**Claims**

1. High-temperature storage battery with at least two storage cells (2) arranged above one another as a stack in a housing (3) closed on one side and each having two reactant spaces (4 and 5) which are separated from one another by means of a sheet-like ion-conducting solid electrolyte (6) and which are limited on the outside by means of sheet-like components (7, 8) serving as electrodes, characterised in that the stack of storage cells (2) is formed by placing their components (4,5,6,7,7F,8, 8F,9,10) loosely on one another and is pressed together on one side so as to be leak-proof by means of at least one common resilient constructional element (16), in that the reactant spaces (4, 5) arranged in the region of the end face (3S) designed as a closed end and of the cover (3D) are limited towards the outside by means of a component (7) which serves as an electrode and is designed as a plate and which is equipped with a flange (7F), in that the directly adjacent reactant spaces (4 and 5) of two adjacent storage cells (2) are limited by a component (8) which serves as a common electrode and is designed as a plate and which is equipped with a double flange (8F) brought in the same way as the flange (7F) up to the solid electrolyte (6) of the respective storage cells (2).

2. High-temperature storage battery according to Claim I, characterised in that a sealing means (9) and an insulation (10) are arranged between each flange (7F, 8F) and each solid electrolyte (6).

3. High-temperature storage battery according to Claim 1 or 2, characterised in that the housing (3) is designed as a container closed on one side, and the bases of the storage cells (2) and the bases of the housing (3) have the same shape and in that the resilient constructional element (16) is arranged between the closed end (35) of the housing (3) and the first component (7) serving as an electrode.

4. High-temperature storage battery according to one of Claims 1 to 3, characterised in that the closed end of the housing (3) and the component (7) next to it are connected to one another in an electrically conductive manner, and in that the housing (3) is insulated over its entire remaining inner face.

5. High-temperature storage battery according to one of Claims 1 to 4, characterised in that the housing (3) is equipped with an outward-pointing current collector (15) in the region of its closed end, in that the housing (3) is provided with a cover (3D) at its second end, and there is a second bar-shaped current collector (17) which is fastened to the component (7) arranged next to the cover (3D), and in that the bar-shaped current collector (17) is guided, insulated, outwards through the cover (3D).

6. High-temperature storage battery according to one of Claims 1 to 5, characterised in that the housing (3) and the components (7, 8) serving as electrodes are produced from a material of good electrical conductivity.

7. High-temperature storage battery according to one of Claims 1 to 6, characterised in that the solid electrolyte (6) is produced from beta aluminium oxide or porous magnesium oxide or boron nitrite [sic], and the reactant space (4) serving as an anode space (4) is filled with sodium or lithium, in that the second reactant space serving as a cathode space (5) contains sulphur or iron sulphide, in that the resilient constructional element (16) is designed as a cup spring and is made of an electrically conductive material, and in that the housing (3) is evacuated or filled with an inert gas.

**Revendications**

1. Accumulateur à haute température, comprenant au moins deux éléments d'accumulateur (2) qui sont empilés dans une enveloppe (3) fermée sur un côté et présentent chaque fois deux chambres de réactif (4 et 5) qui sont séparées l'une de l'autre par un électrolyte solide (6) plat, conducteur d'ions, et sont délimitées vis-à-vis de l'extérieur par des composants (7, 8) plats, servant d'électrodes, caractérisé par le fait que la pile d'éléments d'accumulateur (2) est formée par la superposition amovible de ses composants (4,5,6,7, 7F,8,8F,9,l0) et est comprimée, de façon étanche, unilatéralement par au moins un composant (16) élastique commun, que les chambres de réactif (4, 5) disposées dans la zone de la face frontale (3S), réalisée sous la forme d'une extrémité fermée, et du couvercle (3D) sont délimitées vis-à-vis de l'extérieur par un composant (7) servant d'électrode, qui est réalisé sous la forme d'une plaque et est muni d'un rebord (7F), que les chambres de réactif (4 et 5) directement adjacentes de deux éléments d'accumulateur (2) voisins sont délimitées par un composant (8), servant d'électrode commune, qui est réalisé sous la forme d'une plaque et est muni d'un double rebord (8F) qui rejoint, à l'instar du rebord (7F), l'électrolyte solide (6) des éléments d'accumulateur (2) respectifs.

2. Accumulateur à haute température selon la revendication 1, caractérisé par le fait qu'un joint d'étanchéité (9) et un corps isolant (10) sont disposés entre chaque rebord (7F, 8F) et chaque électrolyte solide (6).

3. Accumulateur à haute température selon la revendication 1 ou 2, caractérisé par le fait que l'enveloppe (3) est un récipient fermé sur un côté et les surfaces de base des éléments d'accumulateur (2) et les surfaces de base de l'enveloppe (3) présentent la même forme, et que le composant (16) élastique est disposé entre l'extrémité (3S) fermée de l'enveloppe (3) et le premier composant (7) servant d'électrode (7).

4. Accumulateur à haute température selon l'une des revendications 1 à 3, caractérisé par le fait que l'extrémité fermée de l'enveloppe (3) et le composant (7) adjacent sont reliés l'un à l'autre de manière électriquement conductrice, et que l'enveloppe (3) est isolée sur toute sa surface intérieure restante.

5. Accumulateur à haute température selon l'une des revendications 1 à 4, caractérisé par le fait que dans la zone de son extrémité fermée, l'enveloppe (3) est munie d'une borne de contact (15) orientée vers l'extérieur, qu'à sa deuxième extrémité l'enveloppe (3) est munie du couvercle (3D) et d'une deuxième borne de contact (17) en forme de bâtonnet, qui est fixée au composant (7) adjacent au couvercle (3D), et que la borne de contact (17) en forme de bâtonnet traverse le couvercle (3D) avec une isolation pour passer à l'extérieur.

6. Accumulateur à haute température selon l'une des revendications 1 à 5, caractérisé par le fait que l'enveloppe (3) et les composants (7, 8) servant d'électrodes sont fabriqués à partir d'un matériau bon conducteur électrique.

7. Accumulateur à haute température selon l'une des revendications 1 à 6, caractérisé par le fait que l'électrolyte solide (6) est en oxyde d'aluminium $\beta$ ou en oxyde de magnésium poreux et/ou en nitrure de bore, et du sodium ou du lithium est chargé dans la chambre de réactif (4) servant de chambre d'anode, que la deuxième chambre de réactif servant de chambre de cathode (5) contient du sulfure de soufre ou de fer, que le composant (16) élastique est une rondelle-ressort et réalisé en un matériau bon conducteur électrique, et que l'enveloppe (3) est mise sous vide ou remplie d'un gaz protecteur.